# EUROPEAN PATENT SPECIFICATION

(11) **EP 3 301 936 B1**
(45) Date of publication and mention of the grant of the patent: **03.07.2019**
(21) Application number: 16306284.7
(22) Date of filing: 30.09.2016
(51) Int. Cl.: H04N 21/231, H04N 21/2343, H04N 21/6371, H04N 21/647, H04N 21/239, H04L 29/08

(54) **STREAMING CONTENT CUSTOMIZATION AND DELIVERY NETWORK**
STREAMING-INHALTSANPASSUNG UND -VERTRIEBSNETZ
PERSONNALISATION ET RÉSEAU DE DISTRIBUTION DE CONTENU MULTIMÉDIA EN TEMPS RÉEL

(43) Date of publication of application: 04.04.2018
(73) Proprietor: Alcatel Lucent, 91620 Nozay (FR)
(72) Inventor: VERDOT, Vincent, 91620 Nozay (FR); CORTES, Mauricio, Murray Hill, New Jersey (US)
(74) Representative: Loyer & Abello

(56) References cited:
- GB-A- 2 494 153
- US-A1- 2015 009 403
- US-A1- 2015 326 439
- US-A1- 2015 341 407

## Description

### Field of the invention

The invention relates to the technical field of streaming media content over computer networks.

### Background

Audio webcasting, where the same audio stream is sent to many receivers, video conferencing, or the internet of things (loT) networking, where physical devices, embedded with sensors, collect and exchange data, require one-to-many or many-to-many communications.

Traditional approaches such as using multiple one-to-one unicast connections sending a separate copy of the streaming content from the server to each receiver, does not scale well when many end-users want to access the same streaming content at the same time, for example when users want to view the same television program concurrently.

Multicasting, on the other hand, allows a media source to send a stream only once, the stream being delivered to all end-users requesting the stream. The media source sends a stream to the network, and the network copies the stream so that each destination receives a copy of the stream. This approach, which is the main component of Application Level Multicast makes the most efficient use of network resources compared to one-to-one or client-server approaches.

However, when an end-user requests a customized version of a streaming content, for example a video stream having undergone frame rate conversion, a new stream has to be initiated from the sender to the receiver, thereby increasing the traffic within the network. Document US 20150341407, for example, discloses a system, method, and computer program product for publishing transcoded media content in response to publishing service requests from end users. A user request for media content, is processed intelligently, either by directing the processing of the request to one of a set of transcoding servers so as to effectively balance the load among the servers, or by directing the processing of the request to an appropriate alternative means for satisfying the request. Transcoding tasks can be prioritized. Moreover, the current load on any particular transcoding server can be monitored in conjunction with determination of the load to be created by a transcoding task, in order to facilitate server selection. Transcoding can be performed on-demand or in a batch mode. Alternatively, a request can be satisfied by distributing media content that has already been transcoded and is resident in cache memory in anticipation of such requests.

Document US 20150326439, for example, discloses a method comprising receiving, at a first node via an input port of the first node, a request to establish a data stream between a source node and a sink node; querying a routing table with an identity of the sink node to select an output port of the first node, the routing table mapping each output port of the first node to potential sink nodes; creating an entry in a forwarding table of the first node, the entry mapping the input port and the selected output port to a global identity of the data stream; receiving, at the first node via the input port, data associated with the data stream; querying the forwarding table with the global identity of the data stream to identify the selected output port mapped to the global identity of the data stream; and outputting, by the first node via the selected output port, the received data associated with the data stream.

### Summary

The scope of protection of the present invention is as defined in the appended claims. Any embodiments not falling within such scope should be construed as examples which do not describe parts of the invention.

### Brief description of the drawings

Aspects of the invention will be apparent from and elucidated with reference to the examples described hereinafter with reference to the drawings.
Figures 1 and 2 are schematic representations of a streaming content delivery network according to embodiments of the invention.
Figure 3 is a message sequence chart of a method according to an embodiment of the invention.
Figure 4 is a flowchart of a method according to an embodiment of the invention.

### Detailed description of the embodiments

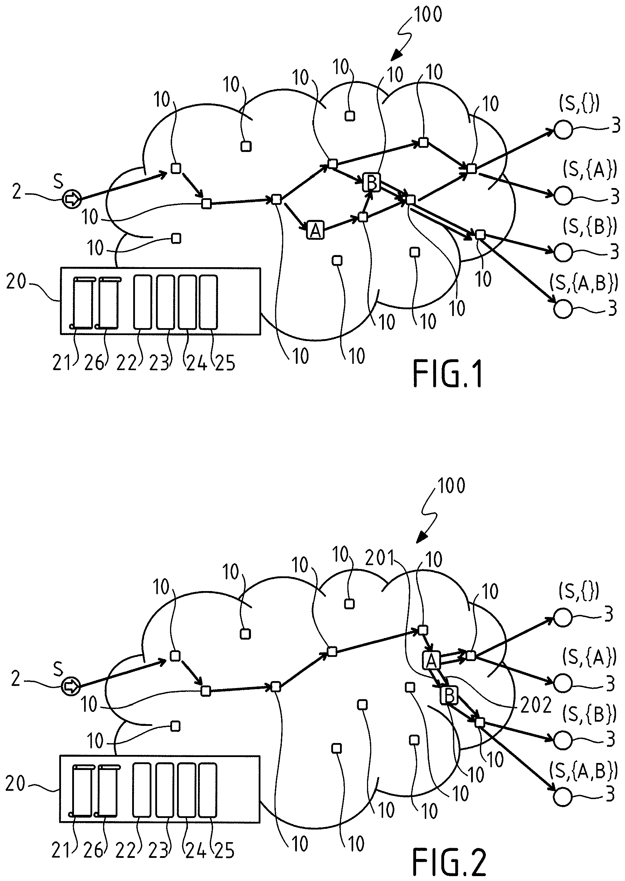

Figure 1 illustrates a streaming content delivery network 100 comprising a collection of nodes 10 and a stream controller 20. The nodes 10 and the stream controller 20 are coupled by an underlying network, such as the Internet. The nodes 10 are organized into an overlay topology for data delivery. Each edge in this topology corresponds to a path between two nodes 10 in the underlying Internet. Between two nodes 10, data is transmitted using unicast delivery supported in the underlying network.

Streaming sources 2 deliver streaming content to the network 100. Streaming sources 2 may, for example, be sensors, video cameras, or audio interfaces. Streaming content may in particular be audio and/or video content. Once the streaming content is available on the network 100, it may be routed to end-users through the nodes 10.

The nodes 10 are proxy servers configured to receive streaming content from streaming sources 2 and/or other nodes 10, and transmit it to other nodes 10 and/or end-users. Some or each of the nodes 10 are configurable to selectively perform operations on streaming contents. A node 10 may be configured to perform an operation on some but not all of the streams passing through said node. In the example illustrated by figure 2, the node performing operation A performs operation A on a stream 201 but not on a stream 202.

The operations performed on the streaming contents may include audio or video processing, (such as digital zoom and pan, brightness adjustments, frame rate conversion, color point conversion, mosquito noise reduction, block noise reduction, detail enhancement, edge enhancement, motion compensation, color calibration), data conversion (such as converting data into another format, for example, converting a captured device signal voltage to a calibrated unit measure).

A streaming content is identified by an original streaming content and by a sequence of operations undergone by the original streaming content. An original streaming content is identified by a unique identifier. An operation is identified by a unique identifier. A sequence of operations contains n operations, with *n* ≥0. In general, operations are not reversible (a streaming content cannot be changed back to the streaming content it was before an operation) nor commutative (the order in which the operations are performed matters). A streaming content is typically identified as a n-tuple (S, {Op1, Op2, ..., Opn}) ; "S" being the identifier of the original streaming content, and "Opx" the identifier of an operation performed on the original streaming content.

In the example, illustrated by figures 1 and 2, a streaming source 2 delivers an original streaming content S. A first end-user 3 receives the original streaming content (S, { }), a second end-user 3 receives the original content S having undergone operation A (S, {A}), a third end-user 3 receives the original content S having undergone operation B (S, {B}), and a fourth end-user 3 receives the original content S having undergone operations A and B (S, {A, B}),

The stream controller 20 comprises an interest broker 23. The interest broker 23 is a processor configured to receive a request for a stream from an end-user 3 and initiate a stream deployment according to any applicable method, as known in the art.

The stream controller 20 comprises a stream manager 22. The stream manager is a processor configured to manage the creation and deployment of a new stream as will be hereinafter fully described.

The stream controller 20 further comprises a stream registry 21. The stream registry 21 is a database registering all the streaming sessions and operation instances within the network 100. In particular, the stream registry 21 registers, for each node 10 within the network 100, a network address of the node in the underlying network (typically an IP address), the streaming contents available at said node 10 and the operations performed at said node 10 in respect of each streaming content. The stream registry 21 may also register for each node the available computing capacity and/or the available bandwidth at said node. The stream registry 21 also registers all the streaming sources 2 and identifies, for each streaming source 2, a network address of the streaming source 2 in the underlying network (typically an IP address), and the original streaming contents provided by said streaming source. The stream registry 21 also registers all the end-users 3 and identifies, for each end-user 3, a network address of the end-user 3 in the underlying network (typically an IP address). The stream registry 21 may also register features of the operations performed within the network, like the computing capacity required by an operation.

The stream controller 20 further comprises a resource manager 24. The resource manager 24 is a database storing the delivery constraints applicable within the network 100. The delivery constraints are typically application-wise constraints such as maximum latency, bandwidth and/or packet loss ratio constraints. The delivery constraints may also be network-related constraints regarding the handling of resources (e.g. bandwidth vs. CPU policy, optimization vs. stability).

The stream controller 20 further comprises a topology map 25. The topology map 25 is a database storing a weighted graph of the overlay topography. In the weighed graph, a distance vector is associated with each link interconnecting two nodes. The distance vector may be an indication of the end to end delay, residual bandwidth, and/or packet loss ratio between two nodes. Hereinafter, a distance within the network refers to the distance vector defined above.

The stream controller 20 further comprises a deployment controller 26. The deployment controller 26 is a processor configured to deploy streams and operations within the network as will be hereinafter fully described.

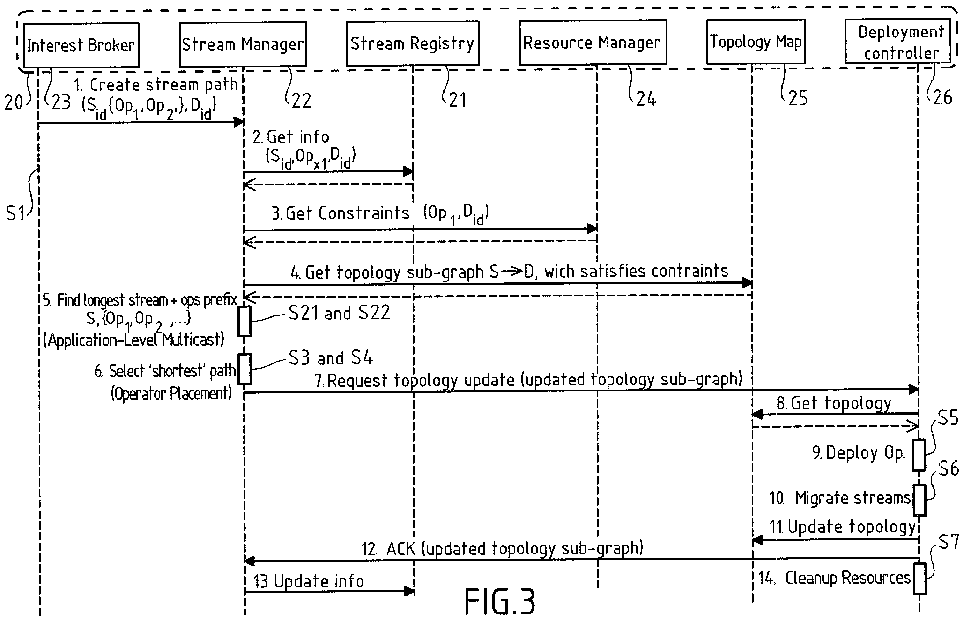

Figure 3 is a message sequence chart of a stream deployment.

The interest broker 23 receives a request for a streaming content from an end-user 3. The request for a streaming content (*S*, {*Op*₁, ... *Opₙ*}) identifies an original streaming content *S* and a sequence of operations {*Op*₁, ... *Op*ₙ} to be performed on the original streaming content *S*.

At a step S1, the interest broker 23 sends a request for creating a stream path to the stream manager 22.

At a step S21, the stream manager 22 retrieves from the stream registry 21 the network address of the streaming source 2 providing the original streaming content identified in the request for a stream, and the network address of the end-user 3 requesting the stream. The stream manager 22 may also retrieve information about the operations identified in the request for a stream, like the computing capacity required by an operation.

The stream manager 22 retrieves from the resource manager 24 the delivery constraints associated with the streaming source 2 providing the streaming content and/or with end-user 3 requesting the streaming content.

The stream manager 22 retrieves from the topology map 25 the weighted graph of the overlay topography.

At a step S22, the stream manager 22 identifies in the weighted graph the routes between the source providing said original streaming content *S* and the end-user 3 satisfying said delivery constraints. To that end the stream manager 22 may use any appropriate pathfinding algorithm.

At a step S3, the stream manager 22 selects, among the routes identified at step S22, the route enabling the most efficient reuse of the existing streams and operation instances within the network 100.

To that end, the stream manager 22 selects a route among the routes Identified at step S22, and selects a node 10, through which Is passing the selected route, the selected node providing a streaming content corresponding to the original stream *S* identified in the request for a stream and having undergone a subset of the sequence of operations {*Op*₁, ... *Op*ᵢ} identified in the request for a streaming content and no other operations than the operations identified in the request for a stream.

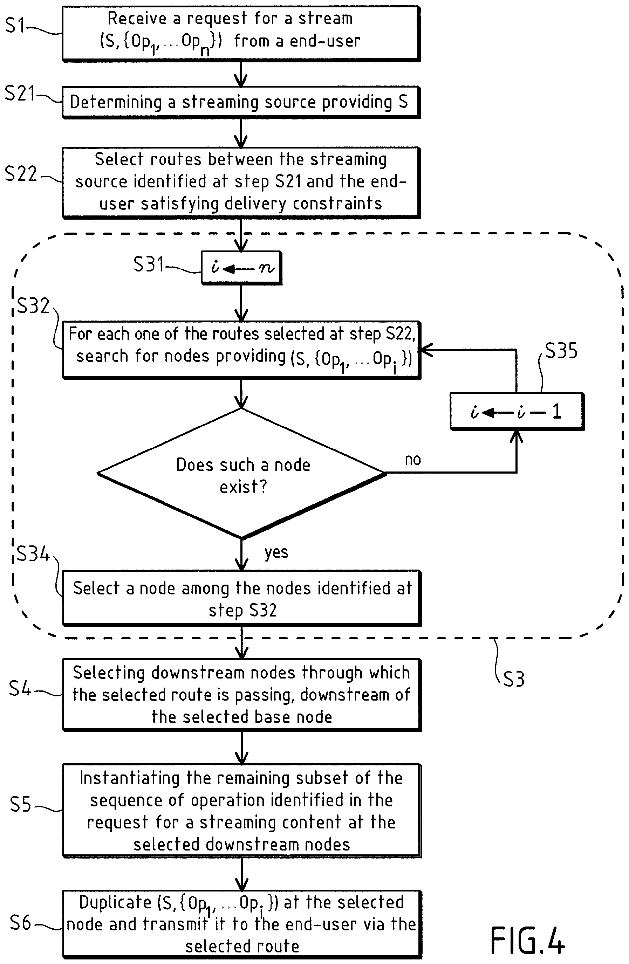

As illustrated at figure 4, step S3 may in particular comprise the following steps.

At a step S31, the stream manager 22 initializes a variable *i* with value *n*, *n* being the total number of operations of the sequence of operations identified in the request for a stream.

At step S32, the stream manager 22 looks, among all the nodes through which one of the routes identified at step S2 is passing, for candidate base nodes providing a stream (*S*, {*Op*₁, ... *Op*ᵢ}) corresponding to the original stream *S* identified in the request for a stream and having undergone the i first operations (and only these) identified in the request for a stream.

If the stream manager 22 does not find a node at step S32, the stream manager 22 decrements *i* at a step S35 and repeats step S32 for *i* ← *i* - 1.

The stream manager 22 repeats steps S32 and S35 until a candidate base node is found.

At the first iteration of step S32, *i* ← *n* and the stream manager 22 looks for a stream (*S*, {*Op*₁*,* ...*Opₙ*}) corresponding to the original stream *S* identified in the request for a stream and having undergone all the operations (and only these) identified in the request for a stream.

At the second iteration of step S32, if such a second iteration should occur, *i* ← *n* - 1 and the stream manager 22 looks for a stream (*S*, {*Op*₁, ...*Op*ₙ₋₁}) corresponding to the original stream *S* identified in the request for a stream and having undergone all the operations (and only these) identified in the request for a stream except for *Opₙ.*

The stream manager 22 then selects, at a step S34, one of the candidate base nodes identified at step S32. The stream manager 22 may in particular compute, for each candidate base node, a distance vector corresponding to the distance from said candidate base node to the end-user based on the topology map, and select the candidate base node which is the closest to the end-user, thereby minimizing the traffic upstream the selected base node.

The stream manager 22 then selects, at a step S4, a group of nodes for performing the remaining subset of the sequence of operations corresponding to the operation(s) identified in the request for a stream but not yet undergone by the selected base stream. The group of nodes may comprise only one node. In other words, the remaining subset is {*Op*ᵢ₊₁, ... *Op*ₙ}, where *i* corresponds to the iteration of step S32 that yielded one or more candidates.

To that end, the stream manager 22 looks in the stream registry 21 for nodes 10 downstream of the selected base node 10 available for performing said operations. The selected base node may be selected to perform said operations. The stream manager 22 retrieves, from the stream registry 21, the computing capacity available at each node, and the computing capacity required by the operations to be performed.

If more than one downstream node 10 is available for performing a given operation, the stream manager 22 may in particular compute, for each available downstream node, a distance vector corresponding to the distance from said available downstream node to the end-user based on the topology map, and select the downstream node which is the closest to the end-user. Indeed, as illustrated by figure 2, when a streaming content is customized close to the end-user, it remains available for other end-users requesting another version of the streaming content at more nodes.

The stream manager 22 sends a request to the deployment controller 26 for deploying a new stream path. The request for deploying a new stream path includes the network address of the end-user, the network address of the selected base node, the identifier of the selected base streaming content, the network address of the selected downstream node(s) and the identifier of the operations to be performed at each selected downstream node.

The deployment controller 26 retrieves from the topology map 25 a subset of the graph of the overlay topography including all the nodes identified in the request for deploying a new stream path.

At a step S5, the deployment controller 26 instantiates the remaining subset of the sequence of operations identified in the request for a streaming content at the selected downstream node(s).

To that end, the deployment controller 26 sends a request to each downstream node selected at step S4 for performing the operation(s) it was selected to perform. The request includes the identifier of the operation(s) to be performed at the downstream node and the identifier of the stream to be processed.

At a step S6, the deployment controller 26 instantiates a new streaming session.

To that end, the deployment controller 26 sends a request to the selected base node for replicating the selected base stream and forwarding it to the end-user via the selected route. Said request includes the identifier of the selected base stream, the network address of each of the nodes of the selected route and the address of the end user.

In response to the request issued by the deployment controller 26, the selected base node replicates the selected base stream and forwards it to the end-user via the selected route using unicast delivery supported in the underlying network.

The stream controller 20 may redeploy existing streams in order to take into account the new stream and new operations within the network. To that end, the stream controller 20 performs steps S2 to S6 for the existing streams.

The deployment controller 26 updates the topology map 26 with the new streams and operation instances.

The deployment controller 26 notifies the stream manager 22 that the new stream path was successfully created and provides the stream manager with the up-to-date overlay graph.

The stream manager 22 updates the stream registry 21 with the new streaming session and if applicable with the new operation instances. Alternatively the deployment controller 26 may directly update the stream registry 21. The stream manager 22 may forward the stream registry 21 update to the end-users and to the nodes.

At a step S7, the deployment controller 26 may suppress operation instances and streams made redundant by the topology change.

The methods described hereinabove may be executed through the use of dedicated hardware as well as hardware capable of executing software in association with appropriate software. When provided by a processor, the corresponding functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read-only memory (ROM) for storing software, random access memory (RAM), and non-volatile storage. Other hardware, conventional and/or custom, may also be included.

## Claims

1. Method for deploying a stream in a streaming content delivery network (100), the streaming content delivery network (100) comprising a collection of nodes (10), some of said nodes (10) being configurable to perform operations on streaming contents, the method comprising steps of:
- (S1) receiving a request for a streaming content (*S*, {*Op*₁, ... *Opₙ*}) issued by an end-user and identifying an original streaming content S and a sequence of operations {*Op*₁, ... *Opₙ*} to be performed on said original streaming content *S*,
- (S21) determining a streaming source (2) providing a streaming content corresponding to the original streaming content *S* identified in the request for a streaming content,
- (S22) identifying routes between the streaming source (2) identified at the streaming source identification step (S21) and the end-user (3),
- (S3) among the routes identified at the route identifying step (S22), selecting a route, and selecting a base node, wherein the selected route passes through the selected base node, and selecting a base streaming content, wherein the selected base streaming content is available at the selected base node and corresponds to the original streaming content *S* identified in the request for a streaming content and having undergone a subset of the sequence of operations {*Op*₁, ... *Op*ᵢ} identified in the request for a streaming content,
the route selection step (S3) comprising steps of:
- (S32) for each route identified at the route identification step (S22), identifying candidate base nodes (10) providing a streaming content (*S*, {*Op*₁,... *Opᵢ*}) corresponding to the original streaming content *S* identified in the request for a streaming content and having undergone a subset consisting of the *i* first operations identified in the request for a streaming content, *i* being initialized (S31) with value *n, n* being the total number of operations identified in the request for a streaming content,
- if at least one candidate base node is identified at the candidate base node identification step (S32), (S34) selecting, as selected base node, one node among the candidate nodes,
- if no node candidate is identified at the candidate base node identification step (S32), (S35) decrementing *i* and repeating the candidate base node identification step (S32),
- (S4) selecting downstream nodes through which the selected route is passing, downstream of the selected base node (10), available for performing a remaining subset of the sequence of operations identified in the request for a streaming content,
- (S5) instantiating a remaining subset of the sequence of operations identified in the request for a streaming content at the selected downstream nodes (10),
- (S6) duplicating the selected base streaming content at the selected base node and transmitting it to the end-user via the selected route, so that the duplicated base streaming content undergoes the remaining sequence of operations at the selected downstream nodes.

2. Method according to the claim 1, wherein the node (10) selected at the base node selection step (S34) is the node (10) which is the closest to the end-user (3).

3. Method according to the any of claims 1 to 2, wherein the routes identified at the route identification step (S22) are selected based on latency constraints.

4. Method according to the any of claims 1 to 3, wherein the routes identified at the route identification step (S22) are selected based on bandwidth constraints.

5. Method according to the any of claims 1 to 4, wherein the routes identified at the route identification step (S22) are selected based on packet loss ratio constraints.

6. Method according to the any of claims 1 to 5, wherein the downstream node selected at the downstream node selection step (S4) is the node (10), through which the selected route is passing, which is the closest to the end-user (3).

7. Stream controller (20) configured to,
- (S1) receive a request for a streaming content (*S*, {*O*p₁,... *Op*ₙ}) issued by an end-user and identifying an original streaming content *S* and a sequence of operations {*Op*₁*,* ... *Opₙ*} to be performed on said original streaming content *S*,
- (S21) determine a streaming source (2) providing a streaming content corresponding to the original streaming content *S* identified in the request for a streaming content,
- (S22) identify routes between the streaming source (2) identified at the streaming source identification step (S21) and the end-user (3),
- (S3) among the routes identified at the route identifying step (S22), select a route, and select a base node, wherein the selected route passes through the selected base node, and select a base streaming content, wherein the selected base streaming content is available at the selected base node and corresponds to the original streaming content *S* identified in the request for a streaming content and having undergone a subset of the sequence of operations {*Op*₁,... *Op*ᵢ} identified in the request for a streaming content,
- (S32) for each route identified at the route identification step (S22), identify candidate base nodes (10) providing a streaming content (*S*, {*Op*₁, ... *Opᵢ*}) corresponding to the original streaming content *S* identified in the request for a streaming content and having undergone a subset consisting of the *i* first operations identified in the request for a streaming content, *i* being initialized (S31) with value *n, n* being the total number of operations identified in the request for a streaming content,
- if at least one candidate base node is identified at the candidate base node identification step (S32), (S34) select, as selected base node, one node among the candidate nodes,
- if no node candidate is identified at the candidate base node identification step (S32), (S35) decrement *i* and repeat the candidate base node identification step (S32).
- (S4) select a downstream node through which the selected route is passing, downstream of the selected base node (10) available for performing a remaining subset of the sequence of operations identified in the request for a streaming content,
- (S5) instantiate a remaining subset of the sequence of operations identified in the request for a streaming content at the downstream node(10),
- (S6) duplicate the selected base streaming content at the selected base node and transmitting it to the end-user via the selected route, so that the duplicated base streaming content undergoes the remaining sequence of operations at the selected downstream node.

8. Stream controller (20) according to claim 7, further configured to select at the base node selection step (S34), the node (10) which is the closest to the end-user (3).

9. Stream controller (20) according to any of claims 7 to 8, further configured to identify, at the route identification step (S22), routes satisfying latency constraints.

10. Stream controller (20) according to any of claims 7 to 9, further configured to identify, at the route identification step (S22), routes satisfying bandwidth constraints.

11. Stream controller (20) according to any of claims 7 to 10, further configured to identify, at the route identification step (S22), routes satisfying packet loss ratio constraints.

12. Stream controller (20) according to any of claims 7 to 11, further configured to identify, at the downstream node selection step (S4), the node (10), through which the selected route is passing, which is the closest to the end-user (3).

13. Streaming content delivery network (100), comprising:
nodes (10) configured to receive streaming content from streaming sources (2) or other nodes (10) and transmit it to other nodes (10) or end-users (3), some nodes (10) being configurable to perform operations on streaming contents, and
a stream controller (20) according to any of claims 7 to 12.

## Patentansprüche

1. Verfahren zum Implementieren eines Streams in einem Streaminginhaltsübergabenetzwerk (100), wobei das Streaminginhaltsübergabenetzwerk (100) eine Sammlung von Knoten (10) umfasst, wobei einige der Knoten (10) auslegbar sind, Operationen an Streaminginhalten durchzuführen, wobei das Verfahren die folgenden Schritte umfasst:
- (S1) empfangen einer Anforderung eines Streaminginhalts (*S, {Op*₁*,* ... *Op*ₙ})*,* die von einem Endbenutzer ausgegeben wurde, und Identifizieren eines Originalstreaminginhalts S und einer Folge von Operationen {*Op*₁, ... *Opₙ*}, die an dem Originalstreaminginhalt *S* durchzuführen sind,
- (S21) Bestimmen einer Streamingquelle (2), die einen Streaminginhalt bereitstellt, der dem Originalstreaminginhalt *S* entspricht, der in der Anforderung eines Streaminginhalts identifiziert ist,
- (S22) Identifizieren von Routen zwischen der Streamingquelle (2), die im Schritt (S21) zum Identifizieren einer Streamingquelle identifiziert wurde, und dem Endbenutzer (3),
- (S3) aus den Routen, die im Routenidentifikationsschritt (S22) identifiziert wurden, Auswählen einer Route und Auswählen eines Basisknotens, wobei die ausgewählte Route durch den ausgewählten Basisknoten verläuft, und Auswählen eines Streamingbasisinhalts, wobei der ausgewählte Streamingbasisinhalt am ausgewählten Basisknoten verfügbar ist und dem Originalstreaminginhalt *S,* der in der Anforderung eines Streaminginhalts identifiziert ist und der einem Untersatz der Folge von Operationen {*Op*₁, ... *Opi}* unterzogen wurde, die in der Anforderung eines Streaminginhalts identifiziert sind, entspricht,
wobei der Routenauswahlschritt (S3) die folgenden Schritte umfasst:
- (S32) für jede im Routenidentifikationsschritt (S22) identifizierte Route Identifizieren von Basisknotenkandidaten (10), die einen Streaminginhalt *(S,* {*Op*₁, ... *Opᵢ*}) bereitstellen, der dem Originalstreaminginhalt *S* entspricht, der in der Anforderung eines Streaminginhalts identifiziert ist und der einem Untersatz, der aus den ersten *i* Operationen besteht, die in der Anforderung eines Streaminginhalts identifiziert sind, unterzogen wurde, wobei *i* mit einem Wert *n* initialisiert (S31) wird, wobei *n* die Gesamtzahl von Operationen ist, die in der Anforderung eines Streaminginhalts identifiziert sind,
- wenn im Schritt (S32) zum Identifizieren von Basisknotenkandidaten mindestens ein Basisknotenkandidat identifiziert wird, (S34) Auswählen von einem Knoten unter den Knotenkandidaten als ausgewählten Basisknoten,
- wenn im Schritt (S32) zum Identifizieren von Basisknotenkandidaten kein Knotenkandidat identifiziert wird, (S35) Verringern von i und Wiederholen des Schritts (S32) zum Identifizieren von Basisknotenkandidaten,
- (S4) Auswählen von stromabwärtigen Knoten, durch die die ausgewählte Route verläuft, stromabwärts vom ausgewählten Basisknoten (10), die zum Durchführen eines verbleibenden Untersatzes der Folge von Operationen, die in der Anforderung eines Streaminginhalts identifiziert sind, verfügbar sind,
- (S5) Instanziieren eines verbleibenden Untersatzes der Folge von Operationen, die in der Anforderung eines Streaminginhalts identifiziert sind, an den ausgewählten stromabwärtigen Knoten (10),
- (S6) Duplizieren des ausgewählten Streamingbasisinhalts am ausgewählten Basisknoten und Übertragen von diesem via die ausgewählte Route zum Endbenutzer, derart, dass der duplizierte Streamingbasisinhalt an den ausgewählten stromabwärtigen Knoten der verbleibenden Folge von Operationen unterzogen wird.

2. Verfahren nach Anspruch 1, wobei der Knoten (10), der im Basisknotenauswahlschritt (S34) ausgewählt wurde, der Knoten (10) ist, der dem Endbenutzer (3) am nächsten ist.

3. Verfahren nach einem der Ansprüche 1 bis 2, wobei die Routen, die im Routenidentifikationsschritt (S22) identifiziert wurden, auf Basis von Latenzeinschränkungen ausgewählt werden.

4. Verfahren nach einem der Ansprüche 1 bis 3, wobei die Routen, die im Routenidentifikationsschritt (S22) identifiziert wurden, auf Basis von Bandbreiteneinschränkungen ausgewählt werden.

5. Verfahren nach einem der Ansprüche 1 bis 4, wobei die Routen, die im Routenidentifikationsschritt (S22) identifiziert wurden, auf Basis von Paketverlustverhältniseinschränkungen ausgewählt werden.

6. Verfahren nach einem der Ansprüche 1 bis 5, wobei der stromabwärtige Knoten, der im Schritt (S4) zum Auswählen von stromabwärtigen Knoten ausgewählt wurde, der Knoten (10) ist, durch den die ausgewählte Route verläuft, der dem Endbenutzer (3) am nächsten ist.

7. Streamsteuerung (20), die zu Folgendem ausgelegt ist
- (S1) Empfangen einer Anforderung eines Streaminginhalts (*S,* {*Op*₁, ... *Opₙ*}), die von einem Endbenutzer ausgegeben wurde, und Identifizieren eines Originalstreaminginhalts *S* und einer Folge von Operationen {*Op*₁, ... *Opₙ*}, die an dem Originalstreaminginhalt *S* durchzuführen sind,
- (S21) Bestimmen einer Streamingquelle (2), die einen Streaminginhalt bereitstellt, der dem Originalstreaminginhalt *S* entspricht, der in der Anforderung eines Streaminginhalts identifiziert ist,
- (S22) Identifizieren von Routen zwischen der Streamingquelle (2), die im Schritt (S21) zum Identifizieren einer Streamingquelle identifiziert wurde, und dem Endbenutzer (3),
- (S3) aus den Routen, die im Routenidentifikationsschritt (S22) identifiziert wurden, Auswählen einer Route und Auswählen eines Basisknotens, wobei die ausgewählte Route durch den ausgewählten Basisknoten verläuft, und Auswählen eines Streamingbasisinhalts, wobei der ausgewählte Streamingbasisinhalt am ausgewählten Basisknoten verfügbar ist und dem Originalstreaminginhalt *S*, der in der Anforderung eines Streaminginhalts identifiziert ist und der einem Untersatz der Folge von Operationen {*Op*₁, ... *Opi}* unterzogen wurde, die in der Anforderung eines Streaminginhalts identifiziert sind, entspricht,
- (S32) für jede im Routenidentifikationsschritt (S22) identifizierte Route Identifizieren von Basisknotenkandidaten (10), die einen Streaminginhalt (*S*, {*Op*₁, ... *Opᵢ*}) bereitstellen, der dem Originalstreaminginhalt *S* entspricht, der in der Anforderung eines Streaminginhalts identifiziert ist und der einem Untersatz, der aus den ersten *i* Operationen besteht, die in der Anforderung eines Streaminginhalts identifiziert sind, unterzogen wurde, wobei *i* mit einem Wert *n* initialisiert (S31) wird, wobei *n* die Gesamtzahl von Operationen ist, die in der Anforderung eines Streaminginhalts identifiziert sind,
- wenn im Schritt (S32) zum Identifizieren von Basisknotenkandidaten mindestens ein Basisknotenkandidat identifiziert wird, (S34) Auswählen von einem Knoten unter den Knotenkandidaten als ausgewählten Basisknoten,
- wenn im Schritt (S32) zum Identifizieren von Basisknotenkandidaten kein Knotenkandidat identifiziert wird, (S35) Verringern von i und Wiederholen des Schritts (S32) zum Identifizieren von Basisknotenkandidaten.
- (S4) Auswählen eines stromabwärtigen Knotens, durch den die ausgewählte Route verläuft, stromabwärts vom ausgewählten Basisknoten (10), der zum Durchführen eines verbleibenden Untersatzes der Folge von Operationen, die in der Anforderung eines Streaminginhalts identifiziert sind, verfügbar ist,
- (S5) Instanziieren eines verbleibenden Untersatzes der Folge von Operationen, die in der Anforderung eines Streaminginhalts identifiziert sind, am ausgewählten stromabwärtigen Knoten (10),
- (S6) Duplizieren des ausgewählten Streamingbasisinhalts am ausgewählten Basisknoten und Übertragen von diesem via die ausgewählte Route zum Endbenutzer, derart, dass der duplizierte Streamingbasisinhalt am ausgewählten stromabwärtigen Knoten der verbleibenden Folge von Operationen unterzogen wird.

8. Streamsteuerung (20) nach Anspruch 7, die ferner dazu ausgelegt ist, im Basisknotenauswahlschritt (S34) den Knoten (10) auszuwählen, der dem Endbenutzer (3) am nächsten ist.

9. Streamsteuerung (20) nach einem der Ansprüche 7 bis 8, die ferner dazu ausgelegt ist, im Routenidentifikationsschritt (S22) Routen zu identifizieren, die Latenzeinschränkungen erfüllen.

10. Streamsteuerung (20) nach einem der Ansprüche 7 bis 9, die ferner dazu ausgelegt ist, im Routenidentifikationsschritt (S22) Routen zu identifizieren, die Bandbreiteneinschränkungen erfüllen.

11. Streamsteuerung (20) nach einem der Ansprüche 7 bis 10, die ferner dazu ausgelegt ist, im Routenidentifikationsschritt (S22) Routen zu identifizieren, die Paketverlustverhältniseinschränkungen erfüllen.

12. Streamsteuerung (20) nach einem der Ansprüche 7 bis 11, die ferner dazu ausgelegt ist, im Schritt (S4) zum Auswählen von stromabwärtigen Knoten den Knoten (10) zu identifizieren, durch den die ausgewählte Route verläuft, der dem Endbenutzer (3) am nächsten ist.

13. Streaminginhaltsübergabenetzwerk (100), das Folgendes umfasst:
Knoten (10), die dazu ausgelegt sind, einen Streaminginhalt von Streamingquellen (2) oder anderen Knoten (10) zu empfangen und diesen zu anderen Knoten (10) oder Endbenutzern (3) zu übertragen, wobei einige Knoten (10) auslegbar sind, Operationen an Streaminginhalten durchzuführen, und
eine Streamsteuerung (20) nach einem der Ansprüche 7 bis 12.

## Revendications

1. Procédé de déploiement d'un flux dans un réseau de distribution de contenu continu (100), le réseau de distribution de contenu continu (100) comprenant un ensemble de noeuds (10), certains desdits noeuds (10) étant configurables pour effectuer des opérations sur des contenus continus, le procédé comprenant les étapes de :
- (S1) réception d'une demande d'un contenu continu (*S,* {*Op*₁*,* ... *Opₙ*}) émise par un utilisateur final et identification d'un contenu continu original S et d'une séquence d'opérations {*Op*₁*,* ... *Opₙ*} à effectuer sur ledit contenu continu original S,
- (S21) détermination d'une source continue (2) fournissant un contenu continu correspondant au contenu continu d'origine S identifié dans la demande de contenu continu,
- (S22) identification de routes entre la source continue (2) identifiée lors de l'étape d'identification de source continue (S21) et l'utilisateur final (3),
- (S3) parmi les routes identifiées lors de l'étape d'identification de routes (S22), sélection d'une route, et sélection d'un noeud de base, dans lequel la route sélectionnée passe par le noeud de base sélectionné, et sélection d'un contenu continu de base, dans lequel le contenu continu de base sélectionné est disponible sur le noeud de base sélectionné et correspond au contenu continu original S identifié dans la demande de contenu continu et ayant subi un sous-ensemble de la séquence d'opérations {*Op*₁*,* ... *Op*ᵢ} identifiée dans la demande de contenu continu,
l'étape de sélection de routes (S3) comprenant les étapes de :
- (S32) pour chaque route identifiée lors de l'étape d'identification de routes (S22), identification de noeuds de base candidats (10) fournissant un contenu continu (S, {*Op*₁*,* ... *Opᵢ*}) correspondant au contenu continu original S identifié dans la demande de contenu continu et ayant subi un sous-ensemble comprenant les i premières opérations identifiées dans la demande de contenu continu, i étant initialisé (S31) avec la valeur n, n étant le nombre total d'opérations identifiées dans la demande de contenu continu,
- si au moins un noeud de base candidat est identifié à l'étape d'identification de noeud de base candidat (S32), (S34) sélection, en tant que noeud de base sélectionné, d'un noeud parmi les noeuds candidats,
- si aucun noeud candidat n'est identifié à l'étape d'identification de noeud de base candidat (S32), (S35) décrémentation de i et répétition de l'étape d'identification de noeud de base candidat (S32),
- (S4) sélection de noeuds en aval par lesquels passe la route sélectionnée, en aval du noeud de base sélectionné (10), disponibles pour effectuer un sous-ensemble restant de la séquence d'opérations identifiée dans la demande de contenu continu,
- (S5) instanciation d'un sous-ensemble restant de la séquence d'opérations identifiée dans la demande de contenu continu sur les noeuds en aval sélectionnés (10),
- (S6) duplication du contenu continu de base sélectionné sur le noeud de base sélectionné et sa transmission à l'utilisateur final via la route sélectionnée, de sorte que le contenu continu de base dupliqué soit soumis à la séquence d'opérations restante au niveau des noeuds en aval sélectionnés.

2. Procédé selon la revendication 1, dans lequel le noeud (10) sélectionné à l'étape de sélection de noeud de base (S34) est le noeud (10) qui est le plus proche de l'utilisateur final (3).

3. Procédé selon l'une quelconque des revendications 1 et 2, dans lequel les routes identifiées lors de l'étape d'identification de routes (S22) sont sélectionnées sur la base de contraintes de latence.

4. Procédé selon l'une quelconque des revendications 1 à 3, dans lequel les routes identifiées lors de l'étape d'identification de routes (S22) sont sélectionnées sur la base de contraintes de bande passante.

5. Procédé selon l'une quelconque des revendications 1 à 4, dans lequel les routes identifiées lors de l'étape d'identification de routes (S22) sont sélectionnées sur la base de contraintes de rapport de perte de paquets.

6. Procédé selon l'une quelconque des revendications 1 à 5, dans lequel le noeud en aval sélectionné à l'étape de sélection de noeud en aval (S4) est le noeud (10) par lequel passe la route sélectionnée, qui est le plus proche de l'utilisateur final (3).

7. Contrôleur de flux (20) configuré pour,
- (S1) la réception d'une demande pour un contenu continu (*S*, {*Op*₁*,* ... *Opₙ*}) émise par un utilisateur final et l'identification d'un contenu continu original S et d'une séquence d'opérations {*Op*₁*,* ... *Opₙ*} à effectuer sur ledit contenu continu original S,
- (S21) la détermination d'une source continue (2) fournissant un contenu continu correspondant au contenu continu d'origine S identifié dans la demande de contenu continu,
- (S22) l'identification de routes entre la source continue (2) identifiée lors de l'étape d'identification de source continue (S21) et l'utilisateur final (3),
- (S3) parmi les routes identifiées lors de l'étape d'identification de routes (S22), la sélection d'une route, et la sélection d'un noeud de base, dans lequel la route sélectionnée passe par le noeud de base sélectionné, et la sélection d'un contenu continu de base, dans lequel le contenu continu de base sélectionné est disponible sur le noeud de base sélectionné et correspond au contenu continu original S identifié dans la demande de contenu continu et ayant subi un sous-ensemble de la séquence d'opérations {Op1, ... Opᵢ} identifiée dans la demande de contenu continu,
- (S32) pour chaque route identifiée lors de l'étape d'identification de routes (S22), l'identification de noeuds de base candidats (10) fournissant un contenu continu (S, {*Op*₁*,* ... *Opᵢ*}) correspondant au contenu continu original S identifié dans la demande de contenu continu et ayant subi un sous-ensemble comprenant les i premières opérations identifiées dans la demande de contenu continu, i étant initialisé (S31) avec la valeur n, n étant le nombre total d'opérations identifiées dans la demande de contenu continu,
- si au moins un noeud de base candidat est identifié à l'étape d'identification de noeud de base candidat (S32), (S34) la sélection, en tant que noeud de base sélectionné, d'un noeud parmi les noeuds candidats,
- si aucun noeud candidat n'est identifié à l'étape d'identification de noeud de base candidat (S32), (S35) la décrémentation de i et la répétition de l'étape d'identification de noeud de base candidat (S32),
- (S4) la sélection d'un noeud en aval par lequel la route sélectionnée passe, en aval du noeud de base sélectionné (10), disponible pour effectuer un sous-ensemble restant de la séquence d'opérations identifiée dans la demande de contenu continu,
- (S5) l'instanciation d'un sous-ensemble restant de la séquence d'opérations identifiée dans la demande de contenu continu sur le noeud en aval sélectionné (10),
- (S6) la duplication du contenu continu de base sélectionné sur le noeud de base sélectionné et sa transmission à l'utilisateur final via la route sélectionnée, de sorte que le contenu continu de base dupliqué soit soumis à la séquence d'opérations restante au niveau du noeud en aval sélectionné.

8. Contrôleur de flux (20) selon la revendication 7, configuré en outre pour sélectionner, lors de l'étape de sélection de noeud de base (S34), le noeud (10) qui est le plus proche de l'utilisateur final (3).

9. Contrôleur de flux (20) selon l'une quelconque des revendications 7 et 8, configuré en outre pour identifier, à l'étape d'identification de routes (S22), des routes satisfaisant des contraintes de latence.

10. Contrôleur de flux (20) selon l'une quelconque des revendications 7 à 9, configuré en outre pour identifier, à l'étape d'identification de routes (S22), des routes satisfaisant des contraintes de bande passante.

11. Contrôleur de flux (20) selon l'une quelconque des revendications 7 à 10, configuré en outre pour identifier, à l'étape d'identification de routes (S22), des routes satisfaisant des contraintes de rapport de perte de paquets.

12. Contrôleur de flux (20) selon l'une quelconque des revendications 7 à 11, configuré en outre pour identifier, à l'étape de sélection de noeud en aval (S4), le noeud (10), par lequel passe la route sélectionnée, qui est le plus proche de l'utilisateur final (3).

13. Réseau de distribution de contenus continus (100), comprenant :
des noeuds (10) configurés pour recevoir un contenu continu à partir de sources continues (2) ou d'autres noeuds (10) et le transmettre à d'autres noeuds (10) ou à des utilisateurs finaux (3), certains noeuds (10) étant configurables pour effectuer des opérations sur des contenus continus, et
un contrôleur de flux (20) selon l'une quelconque des revendications 7 à 12.
